# EUROPEAN PATENT APPLICATION

(11) **EP 3 236 218 A1**
(43) Date of publication of application: **25.10.2017**
(21) Application number: 17167118.3
(22) Date of filing: 19.04.2017
(51) Int. Cl.: G01F 23/76, G01F 23/284, H01Q 1/22, H01Q 15/14, H01Q 19/10, G01S 13/88

(54) **FLOATING ROOF TARGET PLATE**

(30) Priority: 19.04.2016 US 201615132497
(71) Applicant: Rosemount Tank Radar AB, 435 23 Mölnlycke (SE)
(72) Inventor: Serneby, Ingemar, 515 32 VISKAFORS (SE); Ohlsson, Magnus, 610 21 NORSHOLM (SE)
(74) Representative: Awapatent AB

(57) **Abstract**

A reflective target plate (13; 113) for mounting on a floating roof (3) of a tank (1) for ensuring satisfactory reflection of radar signals emitted from a radar level gauge towards the floating roof. The plate comprises a plurality of elongated grooves (16), each formed by two flat, radar reflective surfaces (17) facing each other, normals of the surfaces being perpendicular to each other. A first set (15a) of elongated grooves has grooves extending with their longitudinal axis in a first direction, and a second set (15b) of elongated grooves has grooves extending with their longitudinal axis in a second direction, the first and second directions being perpendicular to each other.

The target plate will sufficiently reflect circularly polarized radar and linearly polarized radar will be equally reflected regardless of the rotation of the plate. This will facilitate installation, as the orientation of the plate becomes less critical.

## Description

### Field of the invention

The present invention relates to a radar reflector or target plate for a floating roof, intended to be used in connection with a radar level gauge.

### Background of the invention

For some products stored in large tanks, it is desirable to reduce contact between the product stored in the tank and the surrounding atmosphere. In such cases, the tank may be provided with a cover arranged to float on the surface of the product. The cover is often referred to as a "floating roof", and the tank is then referred to as a "floating roof tank".

Radar level gauges (RLG's) are more and more frequently used to measure the level and position of such floating roofs. The RLG may employ linear or circular polarization. A flat radar reflector, referred to as a target plate, is generally arranged on the roof in order to provide a fixed target from which radar reflection is satisfactory. The flat target plate needs to be aligned so that the radar beam will impact directly and straight. Therefore, in a situation where the floating roof tilts, e.g. due to friction against the inner wall of the tank, the return signal from such a flat target plate will become weak. A further issue with a conventional flat target plate is that it is very sensitive to rain and snow, which may deteriorate the operation of the RLG.

An alternative solution is to use a corner reflector, which will provide a straight reflection also when it is tilted. However, a corner reflector needs to be arranged directly beneath the radar, and any misalignment will degrade the function. In order to avoid such problems, a corner reflector needs to be made relatively large, making it expensive and bulky.

Yet another example of a target plate, disclosed e.g. in US 8,040,274, is a sheet of reflective material bent to form parallel grooves, such that surfaces facing a groove form an angle of 90 degrees. Any radiation entering such a groove will be reflected twice and returned in the opposite direction. However, if the polarization field forms an angle with the orientation of the grooves, the reflection may become weaker. In other words, the plate will compensate if the floating roof tilts around one axis, but the signal strength may drop if the floating roof tilts around the other axis.

It is clear from the above that a fully satisfactory solution for ensuring sufficient radar reflection from a floating roof is not available. In particular, conventional solutions are not suitable for circular polarization radar level gauges, and also do not provide optimal performance for linear polarization radar level gauges.

### General disclosure of the invention

It is therefore an object of the present invention to provide an improved target plate for radar level detection of a floating roof. In particular, it is an object to provide such a target plate which is suitable for circular as well as linear polarization radar.

According to an aspect of the invention, these and other objects are achieved by reflective target plate having a primary extension in a plate plane, said plate being intended to be mounted on a floating roof of a tank, underneath a non-contact radar level gauge arranged on the tank and with the plate plane normal to a general direction of propagation of radar signals emitted from the radar level gauge, in order to ensure satisfactory reflection of radar signals emitted from a radar level gauge towards the floating roof. The target plate comprises a plurality of elongated grooves formed on a reflecting side of the plate, each groove formed by two flat, radar reflective surfaces facing each other, each reflective surface forming an angel of substantially 45 degrees with the plate plane and normals of the two surfaces being substantially perpendicular to each other. The plurality of elongated grooves include a first set of elongated grooves which extend with their longitudinal axis in a first direction, and a second set of elongated grooves which extend with their longitudinal axis in a second direction, the first and second directions being substantially perpendicular to each other, such that, in use, radar signals emitted from the radar level gauge and incident into the grooves are reflected in two opposing radar reflective surfaces and returned towards the radar level gauge.

In the present application, the expression "substantially" in connection to an angle is intended to represent a possible angular deviation of two degrees or less. In other words, "substantially perpendicular" indicates an angle in the range of 88-92 degrees.

As two reflective surfaces facing each other each form an angle of 45 degrees with respect to the plate plane, and have normals perpendicular to each other, each groove will have a substantially straight angle V-shaped cross section normal to its longitudinal direction. This ensures that any radiation that enters the groove is reflected back in the same direction from which it came, i.e. will be reflected 180 degrees, even if the groove is tilted around its longitudinal axis. By "incident into the groove" is here intended incident at angle within 45 degrees of the normal to the plate plane.

The fact that the plate includes such grooves oriented with their longitudinal axis orthogonal to each other has several significant advantages.

To begin with, circularly polarized radar will be sufficiently reflected, thereby decreasing losses. For example, a 9dB loss compared to use of linearly polarized radar may be considered to be sufficient.

Further, linearly polarized radar will be equally reflected regardless of the rotation of the plate. This will facilitate installation, as the orientation of the plate becomes less critical.

Also, if the inclination of the floating roof, and thus the target plate, changes during operation, most of the transmitted signal will still be returned at 180 degrees, again decreasing losses.

Each set of elongated grooves may include a plurality of grooves which are parallel to each other. In a simple case, all grooves in a set are parallel to each other, so that all grooves extend in one of the two perpendicular directions.

According to some embodiments, each groove is formed by two elongated flat strips arranged along each other and at straight angle relative each other. When the grooves are parallel, adjacent strips may be connected to each other, to form ridges extending between two grooves. This further simplifies manufacturing, as one ridge may be produced by bending a sheet of material such as metal.

According to some embodiments, the target plate has four quadrants, the first set of grooves includes two groups of parallel grooves arranged in two opposite quadrants, and the second set of grooves includes two groups of parallel grooves arranged in remaining two quadrants.

The target plate can be mechanically formed by a plurality of substantially identical modules, each module comprising a plurality of parallel grooves. By designing the target plate from identical modules, oriented with grooves in the two perpendicular directions, the manufacturing, shipping and handling will be made easy and efficient. The identical modules may be assembled on site. This also makes it possible to form a very large target plate by mounting several modules together and thus allowing a very long measuring range.

Each grove may have an opening between the two flat surfaces, which opening allows drainage, e.g. of snow and rain. In order to further improve drainage, each flat surface may have a coating of a material that promotes drainage from the surface. One such material could be Teflon.

A combined surface area of all such drainage openings in the plate plane is preferably less than 20% of a total surface area of the plate, in order to avoid deterioration of the function of the level gauge.

### Brief description of the drawings

The present invention will be described in more detail with reference to the appended drawings, showing currently preferred embodiments of the invention.
Figure 1 shows a perspective view of a storage tank with a floating roof covering the product in the tank.
Figure 2a and 2b schematically illustrate reflection by a set of ridges.
Figure 3a is a target plate according to a first embodiment of the invention.
Figure 3b is a target plate according to a second embodiment of the invention.
Figure 4a is a module for forming the target plate in figure 3a.
Figure 4b is a module for forming the target plate in figure 3b.

### Detailed description of currently preferred embodiments

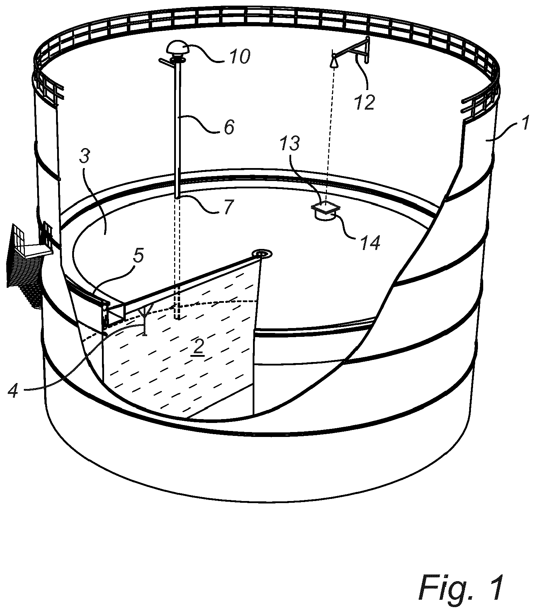

Figure 1 shows a storage tank 1, e.g. used for storing liquid petroleum products. The tank can be relatively large, and typically has a diameter in the order of 10 meters. To prevent or reduce evaporation of the product 2, the tank 1 is provided with a so called floating roof 3, i.e. a cover that rests (floats) on the product surface. It is important to reduce evaporation not only for economical reasons, but also for safety reasons, as petroleum vapor may cause a fire and explosion hazard.

The floating roof will moves up and down as the product level changes. The floating roof is typically provided with legs 4 that will support the roof 3 when the tank is empty (or close to empty) and prevent the roof from resting directly on the tank bottom. The floating roof 3 can be provided with a sealing rim 5 in order to even further reduce evaporation. The rim 5 then also serves to guide the roof 3 when moving up and down in the tank.

In the illustrated example, a radar level gauge 10 is arranged to measure the filing level in the tank. The radar level gauge is here a non-contact radar, adapted to emit electromagnetic radiation in the form of free propagating waves and to receive a reflection of these waves from the product surface. A wave guiding structure in the form of a still pipe 6 is arranged to guide the waves towards the product surface, and the roof is therefore provided with a hole 7 to allow passage of the still pipe 6. In some cases, the still pipe 6 also serves an additional guide for the floating roof, in particular in the rotational direction.

In some situations, it is desirable to also measure the position of the floating roof 3. For this reason, a further radar level gauge 11 is arranged in the tank 1. In the illustrated case, this RLG is mounted on a support structure 12, mounted on the inside wall of the tank and extending a distance into the tank.

Similar to the RLG 10, the RLG 11 is a non-contact radar, and is adapted to emit electromagnetic radiation in the form of free propagating waves (having linear or circular polarization) and to receive a reflection of these waves from the floating roof. Although the floating roof, which typically is made of metal, normally will reflect electromagnetic radiation, this reflection can be weak and consist of several non-stable echoes, making it difficult to process to establish a distance to the floating roof. Therefore, in order to obtain a satisfactory reflection that can be processed to determine a distance to the tank roof, a target plate or reflector plate 13 is arranged below the RLG 11, in order to provide a distinguishable reflection of emitted waves. The target plate 13 is arranged in a plane normal to the general direction of propagation of radar signals emitted by the RLG 11. In a typical case, this general direction is essentially vertical, and the plate 13 is thus arranged horizontally. In order to further facilitate distinction of a reflection from the target plate 13 from any reflection from the floating roof itself, the target plate 13 may be arranged on a support 14, separating it a distance from the upper surface of the floating roof. This distance may be in the order of 0.5 meter.

It is noted that the floating roof during operation may tilt and become inclined with respect to the horizontal plane. There are several reasons for such inclination, including wind, snow collected on the roof, and friction between the roof and the inner wall of the tank leading to uneven movement.

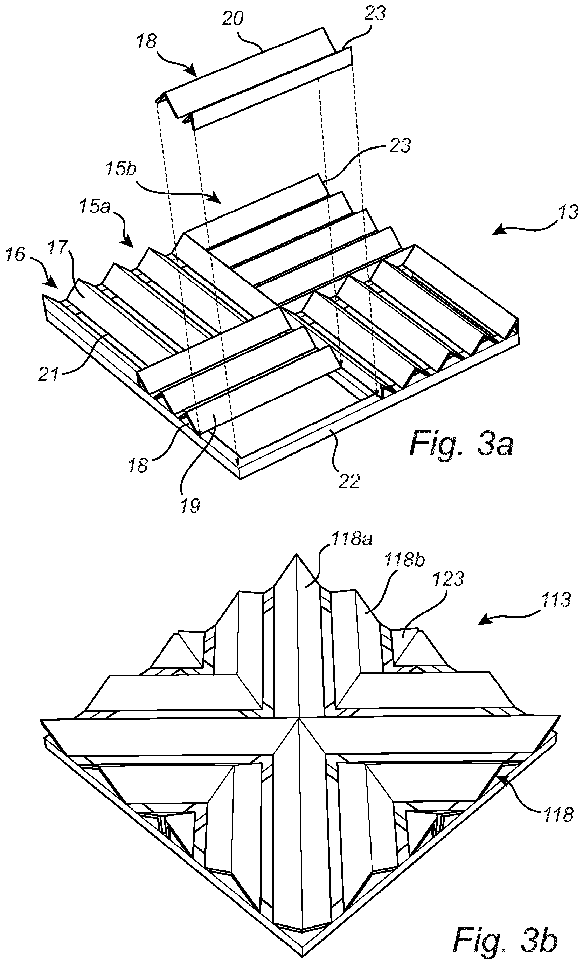

Figure 3a shows a target plate according to an embodiment of the present invention. On its reflecting side, intended to be facing the radar level gauge 11, the target plate 13 has different sets 15a, 15b of parallel grooves 16 each having two inner surfaces 17 which are reflective to electromagnetic radiation. The surfaces 17 are oriented to form a right angle (90 degrees) with respect to each other, so that a cross section normal to the longitudinal direction of the groove 16 will have a right angle V-shape. The grooves 16 in one set 15a are perpendicular to grooves 16 in another set 15b.

The surfaces 17 may the formed on strips of radar reflecting material, e.g. metal. In a typical embodiment, the strips have a width in the order of 8-12 cm, so that the groove is around 5-8 cm deep.

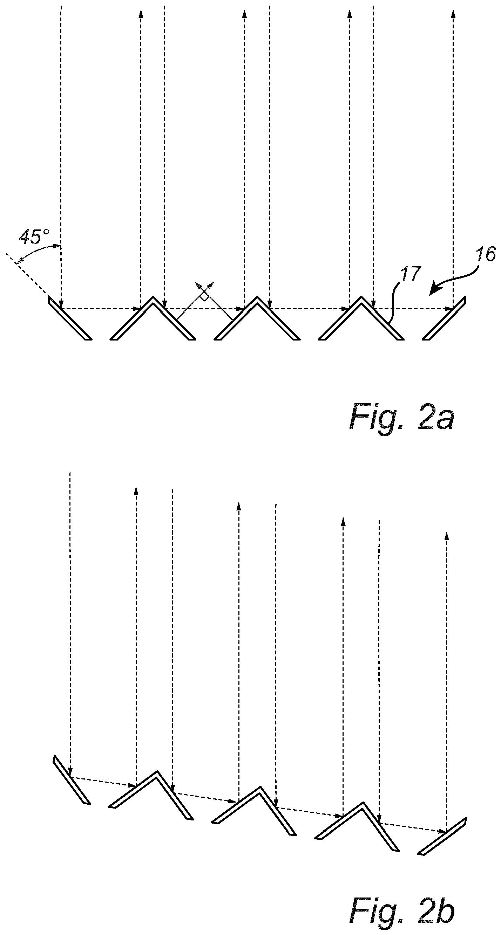

The effect of each set 15a, 15b is to reflect radiation 180 degrees, also if the floating roof (and thus the plate) is inclined. The principle is illustrated in figure 2a and 2b for linearly polarized radiation. In figure 2a, the plate 13 is arranged such that the grooves 15 are aligned with the polarization direction and extend in a plane normal to the incoming radiation, such that each reflecting surface 16 forms an angle of 45 degrees with respect to the incoming radiation. The radiation will be reflected 90 degrees be each reflecting surface, and returned in the opposite direction. In figure 2b, the plate 13 is inclined with respect to the normal. As a result, the first reflection will be greater than 90 degrees, while the second reflection will be less than 90 degrees. Again, the radiation is returned in the opposite direction.

By ensuring that the target plate 13 has grooves extending in two perpendicular directions, linearly polarized microwaves will be satisfactorily reflected regardless inclination. Also circularly polarized microwaves will be satisfactorily reflected.

Returning to figure 3a, the groves are here formed by bending rectangular sheets of suitable material, e.g. a metal, to form elongated ridges 18 with two sides 19 meeting along the bend 20. The bend is 90 degrees, so that two ridges 18 can be placed along each other to form a groove 16 there between.

In the illustrated example, the ridges 18 are arranged at a distance from each other, i.e. they do not meet in the valley of a groove 16 formed between two ridges. Instead an opening 21 is formed, extending along the entire groove 16. This opening 21 may serve to allow rain water or snow to pass through, so as to avoid deterioration of the reflection.

In order to further promote such drainage, the surface of the sides 17 may be coated with a water repellant coating, e.g. Teflon. It is noted that it may be advantageous to also paint or otherwise provide the plate 13 with a dark color, e.g. black. A dark color will increase heat absorption from sunlight, thereby promoting melting of ice and snow.

For the purpose of drainage, each opening is typically a few cm wide. As an example, each opening may be around 3 cm wide. If the grooves as mentioned above are around 6 cm deep, this will result in that around 20% of the total surface area of the plate is in fact open. Such a proportion will not impair the function of the radar level gauge.

In order to avoid an interfering reflection of radar signals passing through the openings, a structure for suppressing reflection of microwaves may be arranged beneath the target plate 13. Such a structure may include a microwave absorbing surface, or a reflecting structure for redirecting microwaves in a different direction. Such reflection suppressing structures are known in the art. The reflection suppressing structure may be integrated with the plate 13, or be provided as a separate element. An example of such a structure is disclosed in EP 1 242 794, hereby incorporated by reference.

A plurality of such ridges 18 are arranged on a frame 22 in a desired pattern. In figure 3a, ridges 18 of equal length are mounted on a square frame 22. The ridges 18 (and thus the grooves 16) are of equal length, and arranged in groups of parallel ridges each covering one quadrant of the square. On each side of such a group of parallel ridges 18 is mounted a single metal strip 23 so as to form the outmost side of the outmost groove.

The target plate 113 in figure 3b is also formed by mounting ridges 118 on a square frame 121, and again, the ridges (and grooves) of each quadrant of the square are parallel. In this case, however, the ridges 118 are oriented diagonally across the quadrant, such that a central ridge 118a is surrounded by shorter ridges 118b. At two opposite corners of the quadrant are arranged triangular end pieces 123, forming the outmost side of the outmost groove. Two such end pieces of neighboring quadrants can optionally be formed by one bended piece of metal.

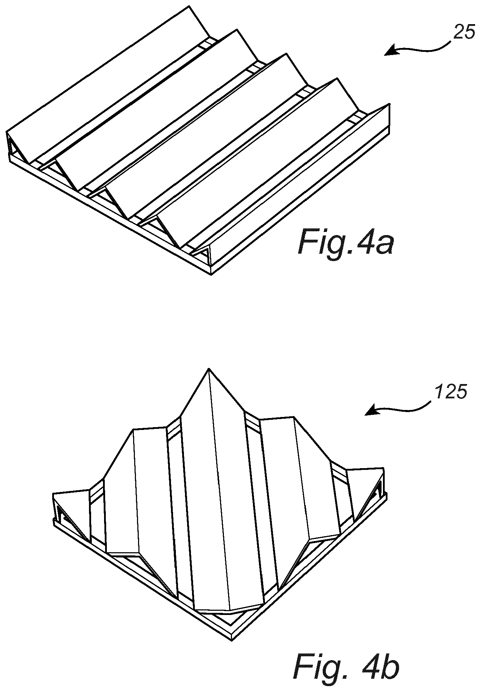

Optionally, a target plate 13, 113 as shown in figures 3a, 3b can be formed of identical modules 25, 125, shown in figures 4a, 4b. By combining four modules like the one in figure 4a, a target plate 13 as the one in figure 3a can be formed. Of course, by using more modules, a larger plate can be formed, while maintaining the principles of the invention.

A target plate according to the present invention may typically have a surface area in the order of square meters. As an example, the side of one square module may be 60 cm. By combining four such modules, a target plate 1.2 m in square (1.44 square meters) can be formed. By combining nine modules, a target plate 1,8 m in square (3,24 square meters) can be formed.

The person skilled in the art realizes that the present invention by no means is limited to the preferred embodiments described above. On the contrary, many modifications and variations are possible within the scope of the appended claims. For example, the grooves can be formed in a different manner, e.g. by folding a single metal sheet multiple times. The openings for rain and snow may not be required, or can be formed in a different way, e.g. by cutting or otherwise forming openings in the valleys of the grooves.

## Claims

1. A reflective target plate (13; 113) having a primary extension in a plate plane, said plate being intended to be mounted on a floating roof (3) of a tank (1) underneath a non-contact radar level gauge arranged on the tank and with the plate plane normal to a general direction of propagation of radar signals emitted from the radar level gauge, in order to ensure satisfactory reflection of radar signals emitted from a radar level gauge towards the floating roof, said plate comprising:
a plurality of elongated grooves (16) formed on a reflecting side of the plate, each groove formed by two flat, radar reflective surfaces (17) facing each other, each reflective surface forming an angle of substantially 45 degrees with the plate plane and normals of said two surfaces being substantially perpendicular to each other,
**characterized by** a first set (15a) of elongated grooves which extend with their longitudinal axis in a first direction, and a second set (15b) of elongated grooves which extend with their longitudinal axis in a second direction, the first and second directions being substantially perpendicular to each other, such that, in use, radar signals emitted from the radar level gauge and incident into the grooves are reflected in two opposing radar reflective surfaces and returned towards the radar level gauge.

2. The reflective target plate of claim 1, wherein each set (15a, 15b) of elongated grooves includes a plurality of grooves (16) which are parallel to each other.

3. The reflective target plate of claim 1 or 2, wherein each groove (16) is formed by two elongated flat strips (19) arranged along each other.

4. The reflective target plate of claim 3, wherein adjacent strips (19) of adjacent, parallel grooves are connected to each other to form a ridge (18; 118, 118a, 118b).

5. The reflective target plate of claim 4, wherein each ridge (18; 118, 118a, 118b) is formed by bending a sheet along a bending line (20), so that the sheet forms two adjacent strips (19).

6. The reflective target plate of any one of the preceding claims, wherein all grooves (16) in a set (15a, 15b) are parallel and of equal length.

7. The reflective target plate of any one of the preceding claims, wherein the target plate has four quadrants, and wherein the first set (15a) of grooves includes two groups of parallel grooves arranged in two opposite quadrants of the target plate, and wherein the second set (15b) of grooves includes two groups of parallel grooves arranged in remaining two quadrants of the target plate.

8. The reflective target plate of any one of the preceding claims, wherein the target plate (13; 113) is mechanically formed by a plurality of substantially identical modules (25; 125), each module comprising a plurality of parallel grooves.

9. The reflective target plate of claim 8, wherein the target plate is mechanically formed by four substantially identical modules, each module (25; 125) comprising all grooves in one of the groups of parallel grooves.

10. The reflective target plate of claim 8 or 9, wherein each module has a square footprint.

11. The reflective target plate of claim 10, wherein all grooves in one module (25) extend parallel to one side of the square module.

12. The reflective target plate of any one of the preceding claims, wherein each groove has an opening (21) between the two flat surfaces, which opening allows drainage, e.g. of snow and rain.

13. The reflective target plate of claim 12, wherein a combined surface area of said openings, in the plate plane, is less than 20% of a total surface area of the plate.

14. The reflective target plate of claim 12 or 13, further comprising a structure for suppressing microwave reflection arranged beneath the openings, such that, in use, any microwaves passing through the openings is not reflected back towards the radar level gauge.

15. The reflective target plate of one of claims 12 - 14, wherein each flat surface (17) has a coating of a material that promotes drainage from the surface.
